# FASCICULE DE BREVET EUROPEEN

(11) **EP 3 278 148 B1**
(45) Date de publication et mention de la délivrance du brevet: **08.05.2019**
(21) Numéro de dépôt: 16718422.5
(22) Date de dépôt: 25.03.2016
(51) Int. Cl.: G02B 5/02, F21V 8/00, B60Q 3/00, B32B 17/10, B60Q 1/00, B60Q 1/52, F21S 43/14, F21S 43/239, F21S 43/245

(54) **VITRAGE LUMINEUX DE VÉHICULE AUTOMOBILE ET VÉHICULE AUTOMOBILE AVEC UN TEL VITRAGE**
BELEUCHTETE GLASSCHEIBE EINES KRAFTFAHRZEUGS UND KRAFTFAHRZEUG MIT EINER DERARTIGEN GLASSCHEIBE
ILLUMINATED GLASS PANEL OF A MOTOR VEHICLE AND MOTOR VEHICLE HAVING SUCH A GLASS PANEL

(30) Priorité: 03.04.2015 FR 1552897
(43) Date de publication de la demande: 07.02.2018
(73) Titulaire: Saint-Gobain Glass France, 92400 Courbevoie (FR)
(72) Inventeur: BERARD, Mathieu, 75019 Paris (FR); DUBOST, Brice, 92400 Courbevoie (FR)
(74) Mandataire: Saint-Gobain Recherche
(86) Numéro de dépôt international: PCT/FR2016/050685
(87) Numéro de publication internationale: WO 2016/156720

(56) Documents cités:
- EP-A1- 0 847 424
- WO-A1-2010/049638
- CN-U- 202 929 237

## Description

La présente invention est relative à un vitrage lumineux (ou « éclairant »), pour véhicule automobile, notamment un vitrage de véhicule automobile à diodes électroluminescentes.

Les diodes électroluminescentes ou DEL (LED en anglais) assurent depuis quelques années l'éclairage de dispositifs de signalisation (feux de signalisation,...), de clignotants ou feux de position de véhicules automobiles. L'intérêt des diodes est leur longue durée de vie, leur efficacité lumineuse, leur robustesse, leur faible consommation énergétique et leur compacité, rendant les appareillages les employant davantage pérennes, et nécessitant un entretien réduit.

Plus récemment, les diodes électroluminescentes ont été utilisées pour les toits automobiles, notamment des toits feuilletés panoramiques à éclairage par diodes électroluminescentes comme décrit dans le document WO2010049638. La lumière émise par les diodes est introduite par la tranche dans le vitrage intérieur formant guide, la lumière étant extraite du vitrage par une couche diffusante sur le vitrage, dont la surface définit le motif lumineux, tel qu'un aplat émail contenant des particules diffusantes diélectriques. La couche diffusante est trop visible de l'utilisateur à l'état off (éteint). Le vitrage lumineux présente alors un aspect très trouble et même le plus souvent opaque dans la zone de la couche diffusante.

La présente invention a donc cherché à mettre au point un nouveau vitrage lumineux de véhicule automobile, en particulier à diodes électroluminescentes, préservant davantage la transparence à l'état off et même sans pénaliser trop fortement la luminance de ce vitrage à l'état on, en étant de préférence compatible avec les exigences industrielles (simplicité, facilité et rapidité de production, fiabilité,...).

A cet effet, la présente invention a pour objet un vitrage lumineux de véhicule automobile (de préférence un toit) comprenant :
- un module verrier (de préférence formant vitrage feuilleté) avec une tranche et des faces principales externes dénommées face A et face B, module verrier comportant au moins un premier vitrage (bombé) en verre minéral ou organique, premier vitrage (transparent) comportant une première face principale, une deuxième face principale (et une première tranche) d'indice de réfraction n1 d'au moins 1,4 à 550nm (mieux dans l'ensemble du spectre visible) et de préférence inférieur à 1,65, et même inférieur à 1,55 ou même encore inférieur ou égal à 1,53 à 550nm (mieux dans l'ensemble du spectre visible), de préférence de 1,5 à 1,53 notamment premier vitrage minéral transparent de préférence clair et même extraclair, et même (bombé) trempé (nu ou déjà revêtu), notamment le module verrier (et même le vitrage lumineux) présentant (dans tout ou partie du clair de vitre) une transmission lumineuse (TL) non nulle (préservation de la vision au travers du module verrier, du vitrage lumineux, au moins dans le clair de vitre),
- une source de lumière (visible), de préférence en périphérie du module verrier, de préférence un ensemble de diodes électroluminescentes (en rangée(s) sur un premier support à circuit imprimé comme un support dit PCB - pour « printed circuit board » en anglais-), notamment une barrette le long de la première tranche du premier vitrage, ou encore source de lumière qui comprend une fibre optique extractrice avec source primaire de lumière (diode(s)),
   la source de lumière étant couplée optiquement au module verrier de préférence par la tranche du module verrier voire par la face A ou la face B (en bordure), et même de préférence (au moins voire uniquement) couplée optiquement au premier vitrage de préférence par la première tranche voire par la première ou deuxième face principale (en bordure) notamment avec un logement des diodes, le module verrier (de préférence le premier vitrage) formant ainsi guide de lumière émise par la source de lumière
- des moyens d'extraction de lumière de la lumière guidée pour former une zone diffusante (lumineuse à l'état on) de largeur d'au moins 1cm, et même d'au moins 5cm (largeur inférieure ou égale à la longueur, largeur naturellement à distinguer de l'épaisseur, longueur de préférence supérieure à 5cm et même à 10cm), moyens d'extraction de lumière comportant (voire constitués de) une couche diffusante comprenant des particules diélectriques diffusantes (espacées entre elles) et liées par une matrice transparente (incolore de préférence) d'indice de réfraction n2 au moins égal à n1 ou tel que n1-n2 est d'au plus 0,15, même d'au plus 0,1 ou mieux d'au plus 0,05 à 550nm (mieux dans l'ensemble du spectre visible) et encore mieux d'au plus 0,02 à 550nm (mieux dans l'ensemble du spectre visible), couche diffusante associée à l'une des première ou deuxième faces (en contact optique avec l'une des première ou deuxième faces), de préférence couche diffusante en contact direct avec l'une des première ou deuxième faces et même directement déposée sur l'une des première ou deuxième faces.

En outre, les particules diffusantes sont en majorité (en nombre) des microparticules espacées entre elles et comprenant une coquille en un matériau diélectrique (et transparent) et en contact avec la matrice transparente, coquille entourant un coeur d'indice de réfraction n3 d'au plus 1,15 à 550nm (mieux dans l'ensemble du spectre visible), mieux d'au plus 1,05 à 550nm (mieux dans l'ensemble du spectre visible), coeur de plus grande dimension dite D₃ dans une gamme allant de 5µm à 200µm, les microparticules ayant une plus grande dimension dite D' inférieure à 2D₃.

Le contraste d'indices de réfraction entre le coeur et la matrice (entre n3 et n2) permet une diffusion de la lumière guidée plus efficace que les particules diffusantes pleines usuelles en limitant fortement le recours à la diffusion multiple qui altère rapidement les propriétés en transmission.

L'extraction lumineuse étant plus efficace avec les microparticules selon l'invention, il est ainsi possible de choisir une faible concentration, nettement plus faible à une couche diffusante classique en obtenant tout de même un motif suffisamment lumineux. Ainsi, une plus faible partie des rayons lumineux traversant le module verrier est affectée lorsque l'utilisateur observe le vitrage de véhicule automobile éteint (état off). La couche diffusante peut assombrir le premier vitrage ou former un très léger voile blanc selon les conditions d'éclairage/de lumière ambiantes.

Une solution avec les couches diffusantes de l'art antérieur pour préserver la vision au travers du vitrage -conférant une transparence globale- consisterait à une réduction de la densité des zones diffusantes typiquement sous forme de réseau de points de taille et espacement appropriés. Ainsi la plupart des rayons traversant les faces du vitrage seraient peu diffusés mais ceci est au détriment de la luminance.

La couche diffusante selon l'invention peut être simplement une pleine couche plutôt qu'un tel réseau de points subcentimétriques.

De préférence au moins 80%, mieux au moins 90% du nombre total de particules diffusantes et même de l'ensemble de particules diffusantes et non diffusantes de la couche diffusante sont des microparticules selon l'invention.

En l'absence de précision dans la présente demande, un indice de réfraction selon l'invention est indiqué à 550nm.

Par convention, la première face du premier vitrage correspond à la face A.

Selon l'invention le premier vitrage est un vitrage simple (ou monolithique), de préférence bombée, comme une feuille de verre minérale (de préférence clair et même extraclair) ou une feuille plastique (rigide). L'épaisseur est de préférence au moins 0,7mm et même d'au moins 1mm.

Selon l'invention un éventuel deuxième vitrage du module verrier est un vitrage simple (ou monolithique), de préférence bombée, comme une feuille de verre minérale transparente ou une feuille plastique transparente (rigide). L'épaisseur est de préférence au moins 0,7mm et même d'au moins 1mm.

La forme du coeur des microparticules est de préférence choisie parmi une sphère, une sphéroïde, voire une forme cylindrique ou oblongue.

D3 correspond généralement au diamètre du coeur (de forme sensiblement sphérique).

De préférence également, la dimension moyenne du coeur dite D₃ₘ est dans une gamme allant de 5µm à 200µm correspondant généralement au diamètre moyen du coeur (de forme sensiblement sphérique).

Les microparticules (et mieux toutes les particules diffusantes) sont espacées entre elles, de préférence au moins ne formant pas d'amas de microparticules et même encore plus préférentiellement individuelles.

D' est choisi inférieur à 2D₃ (donc inférieur à 400µm et de préférence inférieur à 200µm) car cela permet de choisir un faible taux de couverture de microparticules dans une matrice transparente en préservant aisément la transparence.

De préférence, la dimension moyenne de la particule dite D'ₘ (correspondant généralement au diamètre moyen de la particule (de forme sensiblement sphérique)) est inférieure à 2D₃ et même à 2D₃ₘ.

On préfère aussi que l'épaisseur de la coquille dite E₄ (notamment coquille minérale) soit d'au moins 100nm et mieux d'au moins 500nm pour une meilleure tenue mécanique, en particulier pour des microparticules creuses.

De préférence, la couche diffusante est :
- exempte de particules individuelles ayant une plus grande dimension (et même de préférence une dimension moyenne) d'au moins 400µm (et même d'au moins 200µm) ou au moins en quantité suffisamment faible pour ne pas augmenter le flou significativement
- et/ou exempte d'agrégats de particules ayant une plus grande dimension d'au moins 400µm (et même d'au moins 200µm), ou au moins en quantité suffisamment faible pour ne pas augmenter le flou significativement.

Dans un mode de réalisation préféré, ladite plus grande dimension D₃ (et même la dimension moyenne du coeur) est dans la gamme allant de 20µm à 100µm et mieux la plus petite dimension dite I₃ du coeur est telle que I₃>D₃/10 ou mieux encore I₃>D₃/5.

Dans un mode de réalisation préféré, le taux de couverture des microparticules, de préférence creuses, (de préférence formant au moins 80% ou au moins 90% ou 95% des particules diffusantes et même constituant les particules diffusantes) est d'au plus 20% et de préférence d'au plus 10% et mieux d'au moins 1%.

Pratiquement pour mesurer le taux de couverture on réalise au microscope optique des observations visuelles de dessus de la couche diffusante et on détermine la surface totale occupée par les microparticules (somme des surfaces occupées par chacune des microparticules) -microparticules visibles du dessus car la matrice est transparente-, ce calcul étant valide que les microparticules soient en monocouche ou réparties dans le volume de la couche diffusante (à différentes hauteurs). On a déterminé une surface plutôt qu'un volume occupée par les microparticules par simplicité.

Pour déterminer la surface totale occupée par les microparticules, on choisit de préférence une surface de référence de 1cm² (dans le plan du vitrage). Plusieurs images au microscope optique peuvent être nécessaires pour former cette surface de référence prise dans une région quelconque de la zone diffusante. On peut répéter l'évaluation dans plusieurs régions réparties sur la zone diffusante pour un calcul encore plus représentatif du taux de couverture.

De préférence pour garantir l'homogénéité des propriétés optiques de la couche diffusante, le taux de couverture de microparticules de préférence creuses est d'au plus 20% et de préférence d'au plus 10% et mieux d'au moins 1%, taux mesuré dans cette surface de référence prise dans une région quelconque et mieux mesuré dans une pluralité de régions pour couvrir au moins 50% de la surface de la zone diffusante.

Plus n3 est bas, plus le taux de couverture peut être abaissé pour un même niveau de performances lumineuses.

Dans un mode de réalisation préféré, les microparticules (de préférence formant au moins 80% ou au moins 90% des particules diffusantes et même constituant les particules diffusantes) sont creuses pour créer la différence d'indice de réfraction (n3-n2) la plus grande possible avec la matrice. Et de préférence ce sont des microparticules creuses minérales (la majorité et même au moins 80% ou même au moins 90% ou même toutes les microparticules), en particulier en oxyde métallique ou mieux en verre minéral ou en silice. De préférence la majorité et même au moins 80% ou même au moins 90% ou au moins 95% des microparticules ou encore toutes les microparticules sont creuses, minérales et mieux en verre minéral ou en silice.

Les microsphères creuses en coquille de verre sont disponibles commercialement, fabriquées en grandes quantités à bas coût, utilisées à ce jour pour alléger des matériaux de construction cimentaires.

La coquille est de préférence dénuée de porosité ouverte notamment pour maintenir l'air dans le coeur. La coquille peut être indifféremment de surface externe lisse ou rugueuse.

De préférence le matériau diélectrique de la coquille est d'indice de réfraction n4 tel que n4>n3 et en valeur absolue n4-n2 d'au plus 0,2 à 550nm (et mieux dans l'ensemble du spectre visible) et même d'au plus 0,1 à 550nm (et mieux dans l'ensemble du spectre visible).

Dans un mode de réalisation préféré, notamment pour une meilleure tenue au traitement thermique éventuel, la coquille des microparticules est minérale, de préférence en verre minéral, ou en silice, notamment sol-gel, ou encore en oxyde métallique tel que oxyde de titane, de zirconium, d'aluminium. Et même également le coeur peut être solide, minéral par exemple un coeur en silice poreuse (sol gel) et une coquille en silice dense (sol gel).

De préférence, la majorité des microparticules (voire au moins 80% ou au moins 90% des microparticules, de préférence constituant les particules diffusantes) sont individuelles, plutôt que formés par des agrégats de particules. Par simplicité, les microparticules (monoparticule de préférence) peuvent être de préférence monodisperses en taille et de matériau identique. Il suffit donc de contrôler la dispersion des (mono)particules lors de la formation de la couche diffusante.

L'épaisseur de la couche diffusante peut être d'au moins 20µm, d'au moins 0,2mm et même (au moins) millimétrique. L'épaisseur de la couche diffusante peut être supérieure à la plus grande dimension des microparticules.

Les microparticules (au moins la majorité voire au moins 90% des microparticules, de préférence constituant les particules diffusantes) peuvent :
- être dispersées dans la matrice (ou donc avec une coquille entièrement entourée de la matrice) notamment incorporées dans la matrice avant application en couche,
- ou avec un ou des points de contact avec la première ou deuxième face du premier vitrage et liées par la matrice,
- ou sur des points de colle (transparente) sur la première ou deuxième face du premier vitrage et liées par la matrice
- ou sur des points de colle sur la face d'un intercalaire de feuilletage et liées par la matrice

Les microparticules (au moins la majorité voire au moins 90% des microparticules, de préférence constituant les particules diffusantes) peuvent être en saillie de la matrice, à l'air (notamment pour un module verrier avec un unique vitrage) avec ou sans un ou des points de contact avec la première face du premier vitrage.

La matrice transparente, notamment déposée par voie liquide, peut être en matériau choisi parmi un liant polymérique comme une peinture notamment une laque, une résine.

En particulier, la couche diffusante peut comporter une couche liant les microparticules en matériau choisi parmi un liant organique, en particulier à base d'acrylate, de silicone, d'époxy, de silicone-époxy ou de polyuréthane, ou un liant minéral comme un oxyde métallique et/ou de silice, notamment sol-gel, comme un oxyde de silicium, de silicium et de titane, un oxyde de titane, un oxyde de zirconium, un oxyde de titane et zirconium. Et/ou la couche diffusante peut comporter une couche de polyvinylbutyral (PVB) liant les microparticules, de préférence incolore ou claire, qui est un matériau d'intercalaire de feuilletage thermoplastique préféré dans l'automobile à l'éthylène vinylacétate (EVA) ou encore le polyuréthane (PU).

La matrice transparente peut être définie par une transmission lumineuse (intrinsèque) d'au moins 50% mieux d'au moins 80% et même d'au moins 90% qui se déduit de la transmission lumineuse de l'ensemble premier vitrage matrice transparente (hors microparticules) et de la transmission lumineuse du premier vitrage seul.

Les microparticules de préférence creuses peuvent être dans un film polymérique transparent par exemple polyéthylène téréphtalate (PET), en polycarbonate (PC), ou polyméthacrylate de méthyle (PMMA), film de préférence submillimétrique ou millimétrique mieux d'au plus 1mm. Ce film polymérique transparent peut être rapporté par colle optique au premier vitrage (en particulier module verrier avec un seul vitrage simple).

La matrice peut être une couche d'un matériau donné ou une multicouche, par exemple la première couche est un liant organique comme une résine (déposée par voie liquide) d'épaisseur inférieure aux microparticules, et la deuxième couche couvrant les microparticules est un intercalaire de feuilletage thermoplastique (notamment PVB par exemple acoustique), le module verrier étant alors un vitrage feuilleté utilisant un deuxième vitrage.

Les microparticules, de préférence creuses, peuvent être liées par une matrice qui est un intercalaire de feuilletage thermoplastique de préférence PVB, intercalaire de préférence submillimétrique ou millimétrique mieux d'au plus 1mm. Lorsque l'intercalaire de feuilletage (de préférence le PVB par exemple acoustique) est d'indice de réfraction nf inférieur à n1 on préfère que les microparticules soient en contact avec le premier vitrage pour que le plus de rayons possibles atteignent les microparticules.

Lorsque le module est un vitrage monolithique, le guidage se fait uniquement dans le premier vitrage par réflexion totale interne aux première et deuxième faces correspondant respectivement aux faces A et face B.

L'intercalaire de feuilletage peut en outre être teinté surtout s'il ne forme pas tout ou partie de la matrice transparente. L'intercalaire de feuilletage (PVB) peut être clair et dans une zone teintée, comme une bande périphérique (bande de PVB teintée). Pour le pare-brise, il s'agit par exemple d'une bande le long du bord longitudinal supérieur. On préfère que le couplage optique soit avec une tranche distincte de celle du bord avec la bande teintée. Par exemple, la zone teintée est absente de la zone du module verrier entre la tranche de couplage optique et la couche diffusante. Par exemple, on choisit pour le pare-brise, le bord longitudinal inférieur et mieux côté conducteur.

Lorsque le module verrier est un vitrage feuilleté avec un deuxième vitrage et/ou un intercalaire de feuilletage teinté, on favorise le guidage dans le premier vitrage par réflexion totale interne aux première et deuxième faces.

Si on souhaite une propagation du plus grand nombre de rayons dans le premier vitrage dans ce cas :
- la source de lumière (diodes) est en face de la première tranche du premier vitrage, de préférence en centrant la face émettrice des diodes électroluminescentes à la première tranche,
- la couche diffusante est directement sur la première ou la deuxième face du premier vitrage
- de préférence l'indice de réfraction nf de l'intercalaire de feuilletage est inférieur à n1 d'au moins 0,01 à 550nm, comme le PVB, surtout si distinct de la matrice transparente (donc sur la couche diffusante).

Alternativement ou cumulativement, lorsque le module verrier est un vitrage feuilleté avec un intercalaire de feuilletage teinté et/ou un deuxième vitrage teinté et/ou même avec un élément absorbant ou diffusant, une couche (formant isolateur optique) d'indice de réfraction d'au plus 1,3 et même d'au plus 1,2 à 550nm (mieux dans l'ensemble du visible) peut être sur la deuxième face (côté feuilletage) opposée à la première face, comme une couche de silice poreuse (sol gel). La couche diffusante est sur la première ou côté deuxième face, cette couche formant isolateur optique étant adjacente de la zone diffusante si la couche diffusante est sur cette deuxième face.

De préférence la couche diffusante est à l'intérieur du vitrage feuilleté, en particulier sur la deuxième face (de feuilletage) du premier vitrage et non pas en première face ou face A car elle est alors protégée de l'environnement extérieur (abrasion, salissure) et le module verrier conserve l'aspect parfaitement lisse d'un vitrage sans couche diffusante.

En position montée dans le véhicule automobile, dans le cas d'un toit feuilleté la face A est la face côté intérieure du véhicule automobile classiquement dénommée face F4 (et la couche diffusante est de préférence sur la deuxième face opposée à la face A). Dans le cas d'un toit en vitrage simple la face A est la face côté intérieure du véhicule automobile classiquement dénommée face F2 (et la couche diffusante est de préférence sur la face A).

On peut ajouter d'autres fonctions au vitrage lumineux avec un module verrier qui est un vitrage feuilleté, en particulier le toit, comme par exemple un dispositif électrocommandable:
- une fonction pour un passage clair à obscur : un dispositif à valve optique (SPD pour suspended particle device en anglais) avec la couche diffusante sur la première ou la deuxième face et la couche active (entre deux électrodes) entre deux intercalaires de feuilletages (PVB)
- une fonction de teinte : un dispositif électrochrome.

En position montée dans le véhicule automobile, dans le cas d'un pare-brise feuilleté la face A est la face côté intérieure du véhicule automobile classiquement dénommée face F4 (et la couche diffusante est de préférence sur la deuxième face opposée à la face A donc la face F3).

En position montée dans le véhicule automobile qui est une voiture, dans le cas d'une lunette feuilletée la face A est la face côté extérieure de la voiture classiquement dénommée face F1 et la couche diffusante est de préférence sur la deuxième face (face de feuilletage donc F3) opposée à la face A (face A avec d'éventuels essuie-glace).

En position montée dans le véhicule automobile, dans le cas d'un vitrage latéral feuilleté la face A est de préférence la face côté extérieur du véhicule automobile classiquement dénommée face F1 et la couche diffusante est de préférence sur la deuxième face (face de feuilletage) opposée à la face A donc la face F2.

En position montée dans le véhicule automobile, dans le cas d'un vitrage latéral simple ou une lunette arrière simple la face A est la face côté extérieur du véhicule automobile classiquement dénommée face F1 et la couche diffusante est de préférence sur la deuxième face opposée à la face A (face A avec d'éventuels essuie-glace pour la lunette).

Dans la présente demande on entend par véhicule automobile, une voiture, notamment un utilitaire (camionnette, fourgonnette, estafette) inférieur à 3,5 tonnes (utilitaire léger) ou encore un camion. Les vitrages latéraux peuvent être dans des portières coulissantes. Le module verrier peut être dans une porte arrière.

On souhaite que la couche diffusante soit la plus invisible, discrète possible. Notre perception visuelle peut distinguer nettement deux phénomènes différents: la diffusion aux petits angles et sur un domaine angulaire élargi.

La lumière est diffusée uniformément dans toutes les directions. Ceci provoque une atténuation de contraste et une image d'apparence trouble et terne. La norme ASTMD 1003 définit le voile ou flou comme étant la quantité de lumière qui dévie en moyenne de plus de 2,5° par rapport au faisceau de lumière incident - exprimée en pourcentage.

La lumière est diffusée dans un angle étroit avec haute concentration. Cet effet décrit très bien comment de très fins détails peuvent être vus à travers l'échantillon. La qualité de la netteté d'image (clarity en anglais) doit être déterminée dans un angle inférieur à 2,5 degrés.

Le flou et la netteté d'image sont de préférence mesurés par un Hazemeter (tel que BYK-Gardner Haze-Gard Plus) de préférence selon la norme ASTDM D1003 (sans compensation) ou bien ISO 13468 (avec compensation) appliquée pour un premier vitrage en verre organique (PC notamment) comme en verre minéral.

On préfère réaliser les mesures avant l'éventuel feuilletage. Par exemple l'illuminant est placé en face opposée à la face du premier vitrage porteuse de la couche diffusante.

De préférence, la couche diffusante est directement sur la première ou deuxième face du premier vitrage et :
- le flou, dit H₁, à l'état off de l'ensemble premier vitrage et couche diffusante est d'au plus 10% et mieux d'au plus 5% et même au plus 2%
- et mieux la netteté d'image, à l'état off de l'ensemble premier vitrage et couche diffusante est d'au moins 90% et mieux d'au moins 95%.

Les solutions d'émail diffusant actuelles présentent un flou de plus de 80%.

On peut considérer que le flou, dit H'₁, à l'état off de l'ensemble premier vitrage et d'une couche en la matrice transparente sans les microparticules est d'au plus 1%.

On choisit de préférence un premier vitrage en verre minéral, notamment clair et même extraclair.

On préfère également choisir un intercalaire de feuilletage (notamment clair) le moins flou possible c'est-à-dire d'au plus 1,5% et même d'au plus 1%.

On préfère réaliser les mesures avant un éventuel feuilletage. Par exemple l'illuminant est placé en face opposée à la face du premier vitrage porteuse de la couche diffusante.

On souhaite que la couche diffusante soit la plus invisible, discrète possible, il n'en demeure pas moins que le deuxième vitrage et/ou l'intercalaire de feuilletage peuvent être teintés.

De préférence, il n'y a pas de différence colorimétrique notable entre l'ensemble premier vitrage avec la couche diffusante et le premier vitrage sans la couche diffusante notamment
- la différence entre L1 et L2 est d'au plus 20 et même d'au plus 10
- et même :
   - la différence entre a1* et a2* est d'au plus 10 et même d'au plus 5
   - la différence entre b1* et b2* est d'au plus 10 et même d'au plus 5.

Et de préférence la luminance est d'au moins 1cd/m² et même d'au moins 10cd/m².

Dans une autre configuration spécifique, la couche diffusante n'est pas directement sur la deuxième face mais associée via l'intercalaire de feuilletage. La source de lumière est couplée optiquement avec le premier vitrage (par la première tanche), l'intercalaire de feuilletage est clair ou incolore et d'indice de réfraction nf tel que en valeur absolue n1-nf est d'au plus 0,15 mieux d'au plus 0,05, le deuxième vitrage est teinté et comporte sur sa face de feuilletage la couche diffusante. Dans ce cas, on peut aussi définir le flou, dit H₁, à l'état off de l'ensemble deuxième vitrage teinté et couche diffusante d'au plus 10% et mieux d'au plus 5% et même au plus 2% et mieux également la netteté d'image, à l'état off de l'ensemble deuxième vitrage teinté et couche diffusante est d'au moins 90% et mieux d'au moins 95%.

Pour une fonction lumineuse (signalisation) en extérieur de véhicule, le module verrier peut être un vitrage monolithique, avec ledit premier vitrage dont la deuxième face correspond à la face intérieure (dite face F2) revêtue de la couche diffusante, par exemple un vitrage latéral (custode avant ou arrière etc) ou une lunette arrière. On peut ajouter au module verrier côté intérieur une couche teintée d'indice de réfraction inférieur à n1 par exemple un film plastique. On peut utiliser de la colle optique entre le film plastique et le premier vitrage. Si on choisit un film teinté d'indice de réfraction supérieur à n1 on préfère intercaler soit une couche bas indice comme une couche de silice poreuse sol gel soit une colle bas indice.

Dans un mode de réalisation préféré, la source de lumière (de préférence des diodes sur support PCB) est couplée optiquement au premier vitrage (mieux à la première tranche), la couche diffusante est de préférence sur la première face ou sur la deuxième face et le module verrier est un vitrage feuilleté comportant ledit premier vitrage en verre minéral (clair ou extraclair) notamment d'épaisseur d'au plus 2,1mm, une intercalaire de feuilletage en matière polymérique, de préférence thermoplastique (mieux en PVB) et un deuxième vitrage en verre minéral, notamment d'épaisseur d'au plus 2,1mm, et est notamment choisi parmi:
- un toit (pour une fonction lumineuse en intérieur de véhicule) avec le premier vitrage le plus interne, la face A est dite face F4, la couche diffusante est de préférence entre la deuxième face (dite face F3) et l'intercalaire de feuilletage, le deuxième vitrage et/ou l'intercalaire de feuilletage étant de préférence teinté
- un pare-brise (pour une fonction lumineuse par exemple de signalisation au conducteur en intérieur de véhicule, comme moyen anti collision) la face A est dite face F4, la couche diffusante est de préférence entre la deuxième face (dite face F3) et l'intercalaire de feuilletage,
- ou un vitrage latéral ou un vitrage de porte arrière ou une lunette arrière (pour une fonction lumineuse notamment de signalisation de véhicule en extérieur) avec le premier vitrage le plus externe, la face A est dite face F1, la couche diffusante est de préférence entre la deuxième face (dite face F2) et l'intercalaire de feuilletage.

Dans un mode de réalisation préféré, la source de lumière (de préférence des diodes sur support PCB) est couplée optiquement au premier vitrage (mieux à sa première tranche), la couche diffusante est de préférence sur la première face ou sur la deuxième face et le module verrier est un vitrage feuilleté comportant ledit premier vitrage en verre minéral (clair ou extraclair) notamment d'épaisseur d'au plus 2,1mm, une intercalaire de feuilletage en matière polymérique, de préférence thermoplastique (mieux en PVB) et un deuxième vitrage en verre minéral, notamment d'épaisseur d'au plus 2,1mm, et l'intercalaire de feuilletage et/ou le deuxième vitrage étant de préférence teinté, de préférence un isolateur optique d'indice de réfraction inférieur à n1 est sur la deuxième face entre le premier vitrage et l'intercalaire de feuilletage, notamment une couche de silice poreuse (sol-gel) d'indice de réfraction d'au plus 1,3 même d'au plus 1,2 et mieux d'épaisseur d'au moins 200nm même d'au moins 400nm et de préférence d'au plus 1µm. Cette couche de silice poreuse sol-gel est décrite dans la demande WO2008/059170 en particulier en figure 11. Et la couche diffusante est sur la première face ou sur la deuxième face adjacente à la couche de silice poreuse.

La couche de silice poreuse peut être de part et d'autre de la couche diffusante qui est du côté du feuilletage ou même juste dans la zone en amont entre le bord de couplage et le bord de la couche de diffusante le plus proche.

Dans un mode de réalisation préféré, la source de lumière, de préférence des diodes sur support PCB, est couplée optiquement au premier vitrage, un vitrage feuilleté comportant ledit premier vitrage en verre minéral (de préférence clair ou extraclair) notamment d'épaisseur d'au plus 2,1mm, une intercalaire de feuilletage en matière polymérique de préférence thermoplastique (mieux en PVB) et de préférence clair, et un deuxième vitrage en verre minéral (de préférence teinté) notamment d'épaisseur d'au plus 2,1mm, et les microparticules sont liées par la matière polymérique de l'intercalaire de feuilletage formant tout ou partie de la matrice transparente. On choisit de préférence des coquilles minérales, et même des microparticules creuses, comme des billes de silice ou de verre creuses.

En particulier le vitrage lumineux forme un pare-brise, un toit ou un vitrage latéral (custode avant ou arrière inclus).

Dans ces modes de réalisation feuilletés de préférence :
- l'intercalaire de feuilletage est de préférence un PVB (en particulier acoustique) notamment clair ou teinté,
- les premier et deuxième vitrages sont bombés, le premier vitrage est clair ou extraclair et le deuxième vitrage est teinté.

Alternativement, la source de lumière, de préférence des diodes sur support PCB, est couplée optiquement au premier vitrage, la couche diffusante est sur la première face ou sur la deuxième face, le module verrier est un vitrage monolithique, le premier vitrage en verre minéral étant de préférence bombé et/ou trempé thermiquement.

La source de lumière, en particulier des LED, peut être entre la tranche du module verrier (du premier vitrage), de préférence un vitrage feuilleté, et une encapsulation polymérique périphérique comme décrit dans la demande WO2010049638 notamment en figure 15 ou en figure 16. L'encapsulation peut être en polyuréthane, notamment en PU-RIM (reaction in mold en anglais), la réticulation du PU bicomposant opérant dans le moule, une fois les deux composants injectés simultanément. Cette matière est typiquement injectée jusqu'à 130°C et quelques dizaines de bars.

D'autres matières d'encapsulation sont :
- de préférence les thermoplastiques souples : thermoplastique élastomère (TPE), polyvinyle chlore (PVC), terpolymère éthylène-propylène-diène (EPDM), typiquement injectés entre 160°C et 240°C et jusqu'à 100 bars,
- les thermoplastiques rigides : polycarbonate (PC), polyméthacrylate de méthyle (PMMA), polyéthylène (PE), polypropylène (PP), polyamide (PA66), acrylonitrile butadiène styrène (ABS), ABSPC, typiquement injectés entre 280°C et 340°C et entre 500 et 600 bars.

L'encapsulation s'étend le long de la tranche du module verrier et d'au moins un bord de la première face principale (de préférence face F4 pour un vitrage feuilleté). L'encapsulation peut être de toute forme, avec ou sans lèvre, biface, triface.

Dans un mode de réalisation avec le vitrage feuilleté une encapsulation polymérique périphérique (biface donc flush) telle que précitée, et une source de lumière comportant des diodes sur un support PCB, le premier vitrage (rectangulaire ou carré) comprend un évidement (le long de la première tranche de préférence de longueur inférieure à la première tranche, pour loger les diodes et débouchant sur les première et deuxième face principales (rainure longitudinale si tranche de couplage longitudinale, rainure latérale si tranche de couplage latérale), le support PCB, de préférence une barrette rectangulaire, est contre, de préférence collé, la périphérie de la face interne de feuilletage du deuxième vitrage (zone de la face interne éventuellement revêtue d'une couche supplémentaire opaque, comme un émail) et les diodes sont à émission latérale.

Le support PCB peut aider à supprimer la lumière parasite (visible de l'extérieur) dans le deuxième lorsque l'encapsulation éventuelle est affleurante (ou flush) sur la face du deuxième vitrage (face F1) opposée à la face de feuilletage.

Le vitrage feuilleté peut comprendre alternativement ou cumulativement un élément de masquage de la source de lumière (des diodes) et d'éventuelle lumière parasite (notamment en face F1 par exemple la face B opposée à la face plus interne F4 par exemple la face A, à proximité de la zone d'injection), et/ou de masquage de la fixation du vitrage à la carrosserie du véhicule par la face externe, l'élément de masquage pouvant être :
- un partie de l'encapsulation polymérique alors triface (suffisamment opaque, noire),
- et/ou un émail suffisamment opaque, sur la périphérie de la face de feuilletage du deuxième vitrage (face F2) et/ou sur la face la plus extérieure (face F1),
- et/ou une surface réfléchissante (couche ...) sur la périphérie de la face de feuilletage (face F2) du deuxième vitrage.

Parmi les solutions pour masquer la lumière parasite on peut citer celles décrites dans la demande WO2014/037643 dans laquelle l'intercalaire de feuilletage est revêtue d'une couche opaque.

Dans un mode de réalisation, le deuxième vitrage dépassant du premier vitrage, au moins au niveau des parties du bord du vitrage où sont logés la source de lumière (les diodes de préférence), de manière à créer sur la face principale du deuxième vitrage côté feuilletage ou sur un revêtement couvrant cette face une zone de réception du cordon de colle, périphérique par rapport à la source de lumière, qui est suffisamment large et, de ce fait, apte à recevoir un cordon de colle destiné à fixer le vitrage lumineux à la carrosserie du véhicule. Eventuellement, un élément d'encapsulation, ayant la forme d'un revêtement mince, qui couvre la tranche du deuxième vitrage et la zone libre de réception du cordon de colle et s'étend jusqu'à l'intercalaire de feuilletage. Des exemples de réalisation sont décrits en figures 1, 2 et 3 de la demande WO2013153303.

Lorsque la source de lumière est formée des diodes, sur un support PCB, le support PCB peut être en contact de conduction thermique avec un élément dissipateur de chaleur lui-même en contact avec l'air et même avec une encapsulation polymérique. Des exemples de réalisation sont décrits en figures 1, 2, 3 et 4 de la demande WO2013109330.

L'invention porte aussi sur un véhicule automobile incorporant le vitrage lumineux défini précédemment.

De préférence la zone diffusante est dans le clair de vitre notamment lorsque le vitrage comportant un cadre ou une encapsulation polymérique périphérique, par exemple en PU, couvrant la périphérie des faces A et/ou B et est espacée d'au moins 2cm de la tranche du module verrier (du premier vitrage) couplée avec la source de lumière.

La zone diffusante couvre de préférence moins de 50% de la surface du premier vitrage lorsqu'il est nécessaire de préserver un clair de vitre à l'état on. Le module verrier peut comprendre une deuxième source de lumière identique, notamment à diodes électroluminescentes, en périphérie et à l'opposé de la première source. En particulier, pour un vitrage rectangulaire ou carré (plus largement à coins) la première source peut être sur une première tranche longitudinale (respectivement latérale) et la deuxième source peut être sur une deuxième tranche longitudinale (respectivement latérale).

Le module verrier peut comprendre une pluralité de zones diffusantes de taille et/ou formes identiques ou distinctes. Les moyens d'extraction peuvent donc couvrir une partie ou la totalité d'une ou plusieurs faces selon l'éclairage ou l'effet recherché (sous forme de bandes disposées en périphérie d'une des faces pour former un cadre lumineux, des logos ou de motifs, etc.).

Les moyens d'extraction peut être en plusieurs morceaux, par exemple des motifs, identiques ou distincts, continus ou discontinus, et peut être de toute forme géométrique (rectangulaire, carré, en triangle, circulaire, ovale, etc.), et peut former un dessin, un signalétique (flèche, lettre...). On peut facilement obtenir une délimitation des zones contrôlable et reproductible industriellement. Le vitrage peut ainsi comprendre plusieurs zones d'extraction (couches diffusantes) pour former plusieurs zones lumineuses sur le vitrage.

Des moyens d'extraction supplémentaires peuvent le cas échéant être prévus, par exemple une face du premier vitrage peut aussi être matée, sablée, sérigraphiée etc, ou l'épaisseur du verre peut également être gravée, etc.

L'éclairage/l'extraction peut être ajustée pour un éclairage d'ambiance, de lecture, une signalisation lumineuse, un éclairage de nuit ou d'affichage d'informations de toutes natures, de type dessin, logo, signalisation alphanumérique ou autres signalétiques, et peut aussi être activée par télécommande (détection du véhicule dans un parking ou autre, indicateur de (dé)verrouillage de portes), signalisation de sécurité, etc. La lumière peut être continue et/ou par intermittence, monochromatique et/ou plurichromatique, blanche, etc.

Le premier vitrage (et le deuxième vitrage en cas de vitrage feuilleté) peut être de préférence bombé (par les procédés de bombage connus de l'homme du métier). Il s'agit de verres monolithiques, c'est-à-dire composés d'une seule feuille de verre minérale, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le premier vitrage (et le deuxième vitrage en cas de vitrage feuilleté) est de préférence bombé ou galbé. Il peut être parallélépipédique, avec des feuilles ou des faces principales rectangulaires, carrées ou même de toute autre forme (ronde, ovale, polygonale). Il peut être de différentes tailles, et notamment de grande taille, par exemple de surface supérieure à 0,5 ou 1m².

Le verre minéral présentant de multiples atouts, en particulier une bonne résistance à la chaleur (il peut ainsi être proche des sources de rayonnements, par exemple des diodes, malgré le fait qu'elles constituent des points chauds ; il répond également aux besoins des normes de sécurité au feu) et une bonne résistance mécanique (il présente ainsi une facilité de nettoyage et résiste à la rayure).

Le premier vitrage peut (selon le rendu esthétique, l'effet optique souhaité, la destination du vitrage, etc.) être un verre clair (transmission lumineuse TL supérieure ou égale à 90% pour une épaisseur de 4 mm), par exemple un verre de composition standard sodocalcique comme le Planilux® de la société Saint-Gobain Glass, ou extra-clair (TL supérieure ou égale à 91,5% pour une épaisseur de 4 mm), par exemple un verre silico-sodo-calcique avec moins de 0,05% de Fe III ou de Fe₂O₃ comme le verre Diamant® de Saint-Gobain Glass, ou Optiwhite™ de Pilkington, ou B270® de Schott, ou d'autre composition décrite dans le document WO04/025334.

Le verre du premier vitrage peut être neutre (sans coloration), ou (légèrement) teinté ou coloré (verre VENUS ou TSA de la société Saint-Gobain Glass, etc) ; avoir subi un traitement chimique ou thermique du type durcissement, recuit ou trempe (pour une meilleure résistance mécanique notamment) ou bombage, et est généralement obtenu par procédé float.

Le premier vitrage -et même le module verrier- peut présenter cette ou ces propriétés « de manière intrinsèque», c'est-à-dire nu, sans la présence d'un quelconque revêtement, ou être un substrat transparent qui est revêtu sur au moins une surface (autre que sa tranche) d'un revêtement constitué d'une ou de plusieurs couches et présentant cette ou ces propriétés intégrées sur l'équivalent de la totalité de sa surface. La transmission lumineuse est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Bien sûr, le vitrage lumineux n'est pas complétement opaque (ou réfléchissant) de sorte d'un objet peut être vu derrière. Le vitrage lumineux (le module verrier notamment) peut présenter une transmission lumineuse TL non nulle dans tout ou partie du clair de vitre (généralement encadré par émail ou autre couche de masquage), et mieux au moins 40% ou au moins 50% ou 70% du clair de vitre. Pour un toit (souvent teinté), on préfère une transmission lumineuse TL non nulle et même d'au moins 0,5% ou d'au moins 2% et d'au plus 10% et même d'au plus 8%. Pour un vitrage latéral arrière (module verrier feuilleté ou non, incluant custode) ou une lunette arrière (de préférence module verrier feuilleté), on préfère une transmission lumineuse TL non nulle et même d'au moins 10% ou d'au moins 20% et en particulier d'au plus 80% ou d'au plus 70% (notamment vitrage latéral arrière ou lunette teinté). Pour un vitrage latéral avant (module verrier feuilleté ou non, notamment teinté), on préfère une transmission lumineuse TL non nulle et même d'au moins 50% ou d'au moins 70%. Pour un pare-brise (module verrier feuilleté de préférence), on préfère une transmission lumineuse TL non nulle et même d'au moins 70%. Ces valeurs de TL peuvent être dans une zone avec la couche diffusante et/ou adjacente de la couche diffusante (et dans le clair de vitre).

Le premier vitrage est de préférence bombé et même trempé thermiquement. Le premier vitrage peut avoir été traité thermiquement, à une température supérieure ou égale à 450°C de préférence supérieure ou égale à 600°C, notamment est même un verre bombé trempé.

L'épaisseur du premier vitrage est de préférence comprise entre 0,7 et 2,1mm, L'épaisseur du deuxième vitrage est de préférence comprise entre 0,7 et 2,1mm. On peut préférer des épaisseurs égales pour les deux verres.

Le premier vitrage pourrait être essentiellement plastique (feuille(s) organique(s), par exemple en polycarbonate ou PC), pour gagner en compacité et/ou en légèreté, ou pour permettre des formes plus diverses (généralement il comprend au moins une feuille de verre minéral comme indiqué précédemment). En particulier, ce peut être un vitrage latéral ou un toit (pour un module verrier de préférence monolithique).

Dans le cas d'un vitrage feuilleté, le deuxième vitrage peut être de préférence teinté et présente avantageusement une transmission lumineuse globale allant de 1,0% à 60,0% (en particulier de 10,0% à 50,0% et notamment de 20,0% à 40,0%). Il peut en outre présenter une transmission optique (déterminée de façon connue en faisant le rapport entre l'intensité transmise et l'intensité incidente à une longueur d'onde donnée) d'au moins 0,5% pour au moins une longueur d'onde, comprise dans le domaine du visible, au-dessus de 420 nm (et jusqu'à 780 nm), et de préférence d'au moins 0,5% pour toutes les longueurs d'onde comprises dans le domaine allant de 420 à 780 nm.

Dans le cas d'un feuilleté, le module verrier comprend au moins un intercalaire de feuilletage tel qu'au moins une feuille ou film plastique, transparent (de préférence en PVB ou PU (souple) ou thermoplastique sans plastifiant (copolymère éthylène/acétate de vinyle (EVA), etc.), chaque film ayant par exemple une épaisseur entre 0,2 mm et 1,1mm, notamment 0,38 et 0,76mm. L'intercalaire peut être acoustique en particulier comprendre ou être constitué d'une PVB acoustique (tricouche, quadricouche ..). Ainsi, l'intercalaire de feuilletage peut comprendre au moins une couche dite de milieu en matériau plastique viscoélastique aux propriétés d'amortissement vibro-acoustique notamment à base de polyvinylbutyral et de plastifiant, et l'intercalaire, et comprenant en outre deux couches externes en PVB standard, la couche de milieu étant entre les deux couches externes. On peut citer les PVB acoustiques décrits dans les demandes de brevet WO2012/025685, WO2013/175101, notamment teinté comme dans le WO2015079159.

Le deuxième vitrage peut aussi être en verre organique (de préférence rigide, semi rigide) comme un polyméthacrylate de méthyle (PMMA)- de préférence avec intercalaire de feuilletage (PU)-, un polycarbonate (PC)-de préférence avec intercalaire de feuilletage PVB-.

Dans le cas d'un feuilleté, on peut notamment choisir comme premier vitrage / intercalaire de feuilletage/ deuxième vitrage :
- verre minéral / PVB (acoustique etc)/ verre minéral,
- voire verre minéral / intercalaire de feuilletage/ polycarbonate,
- ou même polycarbonate (épais ou non) / intercalaire de feuilletage/ verre minéral.

Alternativement à une structure feuilletée impliquant un intercalaire de feuilletage (en feuille) typiquement thermoplastique, le module verrier (le vitrage lumineux) peut ne comprendre que le premier vitrage simple ou monolithique (par exemple une feuille) auquel éventuellement on rapporte un film fonctionnel auto adhésif (plastique teinté, décoratif etc) ou une collé à la deuxième face du premier vitrage.

Chaque tranche couplée optiquement peut être façonnée, notamment droite et polie.

Comme défini selon l'invention, le vitrage lumineux selon l'invention comprend également au moins une source lumineuse couplée au guide pour une propagation de la lumière (par réflexion totale interne) à l'intérieur du guide (dans l'épaisseur), avantageusement associée ou couplée à la tranche du guide (dans un autre mode, elle pourrait éventuellement être associée ou couplée à l'une des faces principales (en particulier logée dans une cavité ou une rainure).

On peut utiliser une ou plusieurs sources de lumière (identiques ou non), par exemple électriques et/ou constituées de dispositif(s) électroluminescent(s) (DEL, ...). La ou les sources de lumière peuvent être mono- (émettant dans le bleu, vert, rouge, etc) ou polychromatiques, ou être adaptées ou combinées pour produire par exemple une lumière blanche, etc; elles peuvent être continues ou discontinues, etc.

La tranche, le coin ou le bord d'une face du module verrier (du premier vitrage) peut comporter un évidement où sont placées les sources de lumière (on peut par exemple découper (avant trempage) le bord d'une feuille d'un vitrage simple ou feuilleté pour y loger des diodes) et/ou celles-ci peuvent être collées, notamment sur la tranche (on choisit alors une colle avec un indice optique de réfraction intermédiaire entre l'indice du guide et celui du milieu externe ou de la lentille par exemple). La zone évidée peut former une rainure le long du module verrier (du premier vitrage), pour loger une pluralité de sources, rainure non débouchante ou débouchante sur au moins un côté pour faciliter un montage par le côté. Les sources peuvent être dans un moyen de protection et/ou de maintien à l'intérieur de la zone évidée, notamment un profilé en U, fixé à la tranche de couplage par collage, encliquetage, par des boulons etc, et occuper une partie ou la majorité de la zone évidée.

Avantageusement (pour des raisons notamment de taille, environnementales, de chauffe...), on utilise des sources de lumière quasi ponctuelles (telles que des diodes), ces sources étant avantageusement placées le long de la tranche du module verrier, ce mode étant simple, économique et performant.

Les diodes peuvent être de simples puces semi-conductrices (sans encapsulation ou lentille de collimation), de taille par exemple de l'ordre de la centaine de µm ou d'un ou quelques millimètres (par exemple 1mm de largeur, 2,8 mm de longueur et 1,5 mm de hauteur). Elles peuvent aussi comprendre une enveloppe protectrice, provisoire ou non, pour protéger la puce lors de manipulations ou pour améliorer la compatibilité entre les matériaux de la puce et d'autres matériaux et/ou être encapsulées (par exemple encapsulation de faible volume de type 'SMD' (« surface monted device »), avec une enveloppe, par exemple en résine type époxy ou nylon ou PMMA, encapsulant la puce et ayant des fonctions diverses : protection contre l'oxydation et l'humidité, rôle diffusant, de focalisation, ou collimation, conversion de longueur d'onde...).

Le nombre total de diodes est défini par la taille et la localisation des zones à éclairer, par l'intensité lumineuse souhaitée et l'homogénéité de lumière requise.

La puissance de chaque diode est généralement inférieure à 1 W, notamment inférieure à 0,5W.

Les diodes peuvent être (pré)assemblées sur une ou des supports PCB (PCB pour Printed Circuit Board en anglais) ou supports avec des pistes d'alimentation électrique, cs supports PCB pouvant être fixées à d'autres supports (profilés, etc.). Chaque support PCB peut s'étendre en bordure du module verrier et être fixé par pincement, chaussage, clipsage, vissage, colle ou ruban adhésif double face, etc. Le support PCB est généralement mince, notamment d'épaisseur inférieure ou égale à 3 mm, voire 1 mm, voire 0,1 mm ou inférieur le cas échéant à l'épaisseur d'un intercalaire de feuilletage. Plusieurs supports PCB peuvent être prévus, notamment si les zones à éclairer sont très distantes entre elles. Le support PCB peut être en matériau souple, diélectrique ou électroconducteur (métallique tel qu'aluminium etc), être composite, plastique, etc. Les diodes peuvent être soudées sur des pistes isolées électriquement de l'embase, et/ou sur des surfaces dissipatrices de chaleur ("thermal pad") sur des embases plastiques, ou un matériau isolant électrique et conducteur thermique (colle, ruban, scotch, adhésif double face, thermiquement conducteur, graisse thermique, etc.) peut fixer ou être intercalé pour une meilleure dissipation et efficacité lumineuse et pour la pérennité des diodes.

Les diodes peuvent comprendre voire être de préférence simples puces semi-conductrices par exemple de largeur W0 de l'ordre de la centaine de µm ou de 1 à 5mm. La largeur de chaque diode de la source de lumière est de préférence inférieure à l'épaisseur du premier vitrage.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

Chaque diode de la source de lumière peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support PCB,
- une diode, dont la direction principale d'émission est perpendiculaire ou oblique par rapport la face émettrice de la puce.

Les diodes de préférence ont un spectre (de type) gaussien.

Le diagramme d'émission d'une diode classiquement lambertien avec un demi angle d'émission de 60°.

De préférence la distance entre les puces (ou les moyens de collimation si présents) et la première tranche de couplage (respectivement la deuxième tranche de couplage) est inférieure ou égale à 5mm et même à 2mm.

D'autres types de sources que les diodes peuvent éventuellement être utilisées, le cas échéant dans un évidement à cet effet, ou sur un élément rapporté. Ces autres sources de lumière peuvent être directement sur l'une des faces du substrat (par exemple principale), ou être collées ou feuilletées avec un autre substrat, notamment transparent (verre...), à l'aide d'un intercalaire de feuilletage, notamment extraclair.

Quelle que soit la source lumineuse, l'épaisseur de la source est avantageusement faible, pouvant descendre jusqu'à quelques nanomètres ou dizaines de nanomètres notamment.

Dans un mode de réalisation avantageux, un ou plusieurs capteurs liés à l'environnement et/ou au vitrage peuvent être associés aux sources de lumière et/ou au système d'alimentation dudit vitrage. On peut utiliser par exemple un détecteur de luminosité (photodiode, etc.), un capteur de température (extérieur ou intégré, sur le verre ou les sources lumineuses), le capteur utilisé contrôlant par exemple l'alimentation des sources lumineuses via un calculateur ou unité centrale. On peut définir une valeur de mesure du capteur (luminosité maximale par exemple) au-delà de laquelle le vitrage cesse d'opérer une de ses fonctions (extraction de lumière ou activation des sources lumineuses notamment). Pour une valeur supérieure par exemple, l'alimentation du vitrage est bloquée et pour une valeur inférieure, le vitrage ou une de ses fonctions (par exemple son niveau de luminosité) peut être contrôlé(e) via l'information reçue du ou de(s) capteurs. La fonction du vitrage peut aussi être « forcée » par l'utilisateur en désactivant les capteurs.

Les capteurs peuvent être à l'intérieur (par exemple du véhicule) ou à l'extérieur. La gestion du vitrage en fonction de l'environnement extérieur permet par exemple d'améliorer la durabilité des sources lumineuses et autres composants (polymères, composants électroniques...), la limitation de leur fonctionnement dans des conditions de luminosité et/ou de température élevées permettant notamment de réduire de manière significative (entre 10 et 20°C au minimum) les températures maximales auxquelles peuvent être exposées les sources lumineuses pendant l'utilisation du produit, tout en conservant les fonctions du vitrage lumineux. Ce couplage permet également d'adapter automatiquement l'intensité d'éclairage du vitrage aux conditions de luminosité extérieures, sans que l'utilisateur n'intervienne.

Pour un vitrage de véhicule, l'alimentation des sources de lumière peut être par exemple contrôlée par le calculateur central du véhicule autorisant ou non leur allumage en fonction de l'information reçue du capteur de lumière placé par exemple dans la partie haute du pare-brise ou sur un vitrage tel qu'un toit éclairant. Par forte luminosité (jour), la valeur de luminosité dépasse la valeur maximale, n'entraînant pas l'allumage des sources de lumière ; en conditions de faible luminosité (nuit), la valeur maximale n'est pas atteinte, l'activation des sources est alors opérée. L'allumage des sources peut également être commandée par un capteur de température (sur le vitrage ou sur les sources de lumière, etc.).

La présente invention sera mieux comprise et d'autres détails et caractéristiques avantageuses de l'invention apparaitront à la lecture des exemples de vitrages lumineux de véhicule selon l'invention illustrés par les figures suivantes :

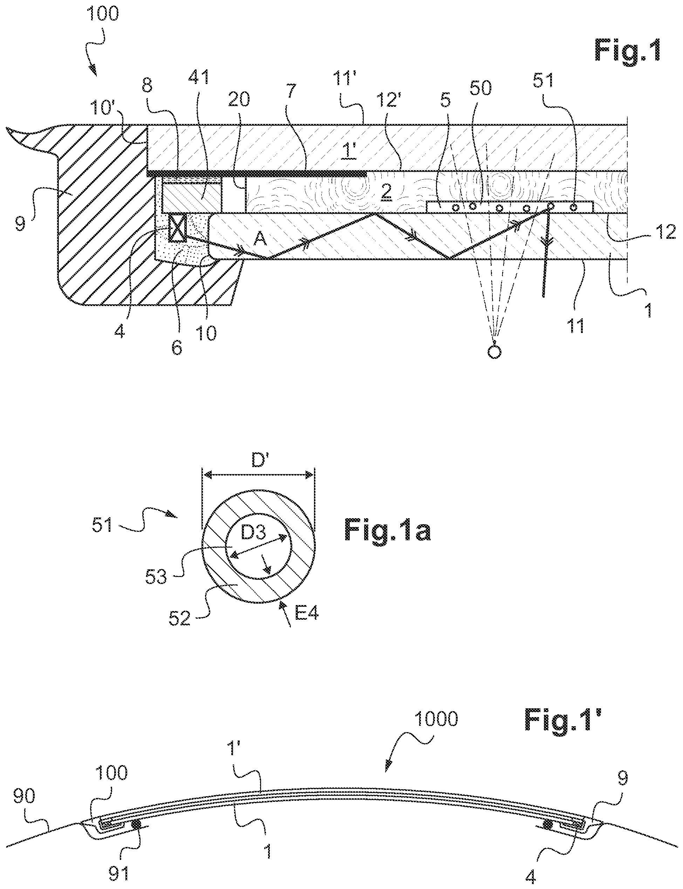

- La figure 1 représente une vue schématique en coupe d'un vitrage lumineux de véhicule automobile dans un premier mode de réalisation de l'invention ;
- la figure 1a est une vue d'une microparticule creuse utilisée pour l'extraction de lumière
- La figure 1' représente une vue schématique en coupe d'un toit automobile lumineux utilisant un vitrage lumineux selon l'invention;
- La figure 2 représente une vue schématique en coupe d'un vitrage lumineux de véhicule automobile dans un deuxième mode de réalisation de l'invention ;
- Les figures 3 à 5 représentent différentes vues schématiques de différentes voitures avec des vitrages lumineux selon l'invention.

On précise que par un souci de clarté les différents éléments des objets représentés ne sont pas nécessairement reproduits à l'échelle.

La figure 1 représente une vue schématique en coupe et partielle d'un vitrage lumineux de véhicule automobile 100 dans un premier mode de réalisation de l'invention.

Dans la figure 1, le vitrage selon l'invention comporte un module verrier sous forme d'un vitrage feuilleté avec une tranche et des faces principales externes dénommées face A et face B lequel comporte :
- un premier vitrage 1, par exemple rectangulaire (de dimensions 300X300 mm par exemple), en verre minéral, présentant une première face principale 11 correspondant à la face A et une deuxième face principale 12, et une tranche 10 de préférence arrondie (pour éviter les écailles) ici tranche longitudinale (ou en variante latérale), par exemple une feuille de verre silicosodocalcique, extraclair comme verre Diamant® commercialisée par la société Saint-Gobain Glass, d'épaisseur égale par exemple à 2,1 mm, vitrage d'indice de réfraction n1 de l'ordre de 1,51 à 550nm
- un intercalaire de feuilletage 2, par exemple un PVB clair d'épaisseur 0,76 mm, de préférence de flou d'au plus 1,5%, avec une tranche 20 ici longitudinale décalée de la tranche longitudinale 10 vers le centre du verre, intercalaire de feuilletage d'indice de réfraction n_{f} inférieur à n1, égal à 1,48 à 550nm
- un deuxième vitrage 5, de même dimensions, avec une composition pour une fonction de contrôle solaire teintée (verre VENUS VG10 ou TSA 4+ commercialisée par la société Saint-Gobain Glass) par exemple d'épaisseur égale par exemple à 2,1 mm) et/ou recouverte d'un revêtement de contrôle solaire (ou d'un film plastique teinté), avec une face principale dite interne ou de feuilletage 12' en face de la deuxième face 12, et une autre face principale 11' correspondant à la face B, et une tranche 10' ici longitudinale.

Le premier vitrage 1 comporte un évidement ou trou traversant le long de la tranche longitudinale 10, de préférence de dimension inférieure à la tranche longitudinale.

Des diodes électroluminescentes 4 s'étendent en bordure du premier vitrage 1. Il s'agit ici de diodes à émission latérale logées dans l'évidement. Ainsi ces diodes 4 sont alignées sur un support PCB 41, par exemple une barrette en parallélépipède, de préférence le plus opaque possible (non transparent) et leurs faces émettrices sont parallèles au support PCB et en regard de la tranche 10 dans la partie de tranche évidée. Le support PCB est fixé par exemple par de la colle 8 (ou un adhésif double) sur le bord de la face de feuilletage du deuxième vitrage, et ici est engagé dans une gorge entre la face de feuilletage 12 et la deuxième face 12' rendu possible par le retrait suffisant de la tranche 20 du PVB. On ajoute sur la face 12' une bande périphérique de masquage 7 en émail opaque qui peut masquer le support PCB et même de la lumière sortante dans cette zone.

Les diodes électroluminescentes comportant chacune une puce émettrice apte à émettre un ou plusieurs rayonnements dans le visible guidé(s) dans le premier vitrage. Les diodes sont de petites tailles typiquement quelques mm ou moins, notamment de l'ordre de 2x2x1 mm, sans optique (lentille) et de préférence non pré-encapsulées pour réduire au maximum l'encombrement.

On réduit au maximum la distance des diodes et la tranche 10, par exemple de 1 à 2 mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°. A titre d'exemple, les diodes (une douzaine) ont une puissance individuelle de 50mW à 100mW, sur une longueur de 20 mm, soit une puissance de 3 à 4 W/m. L'espace entre chaque puce et la tranche 10 couplée optiquement peut être protégé de toute pollution : eau, chimique etc, ceci à long terme comme pendant la fabrication du vitrage lumineux 100.

En particulier, il est utile de pourvoir le vitrage lumineux d'une encapsulation polymérique 9, épaisse de 2,5 mm environ, en bordure du vitrage. Cette encapsulation, assure une étanchéité à long terme (eau, produit de nettoyage...). L'encapsulation apporte aussi une bonne finition esthétique et permet d'intégrer d'autres éléments ou fonctions (inserts de renforcement...).

L'encapsulation 9 est biface : en regard de la tranche du vitrage feuilleté (en contact avec la tranche 10' avec ou sans primaire d'adhésion) et en partie au bord de la face A et présente une lèvre. L'encapsulation 9 est par exemple en polyuréthane noir, notamment en PU-RIM (reaction in mold en anglais). Cette matière est typiquement injectée jusqu'à 130°C et à quelques dizaines de bars.

La matière d'encapsulation noire n'est pas donc transparente au(x) rayonnement(s) visible(s) des diodes. Pour assurer une bonne injection de la lumière dans le premier vitrage, on utilise donc des moyens d'étanchéité à la matière d'encapsulation liquide. Par exemple, les diodes sont couvertes par de la colle optique 6 ou par un vernis de protection.

Comme décrit dans le document WO2011092419 ou le document WO2013017790, l'encapsulation polymérique peut avoir un évidement traversant fermé par un capot amovible pour placer ou remplacer les diodes.

Le vitrage peut avoir une pluralité de zones de lumière, la ou les zones lumineuses occupant de préférence moins de 50%, de la surface d'au moins une face, notamment de géométrie donnée (rectangulaire, carré, rond ...)

Le rayon lumineux A (après réfraction sur la tranche 10) se propage par réflexion totale interne (au niveau de la deuxième face 12 et de la face 11 dite face A) dans le premier vitrage 1 formant un guide de lumière. Pour l'extraction de lumière, une couche diffusante 5 est déposée sur la deuxième face 12 du premier vitrage. Elle comporte une matrice transparente 50, de préférence incolore, d'indice de réfraction n2 au moins égal à n1 ou tel que n1-n2 est d'au plus 0,15 incorporant des particules diffusantes 51.

On choisit des microparticules de préférence creuses formées d'une coquille diélectrique 52 entourant un coeur gazeux d'indice de réfraction n3 d'au plus 1,15, de préférence de l'air, comme montré en figure 1a.

Le diamètre D₃ (diamètre du coeur) est dans une gamme allant de 5µm à 200µm mieux allant de 20µm à 100µm. Le diamètre D' des microparticules (diamètre externe de la coquille) est inférieure à 2 D₃. L'épaisseur de la coquille est de plus de 500nm.

Le taux de couverture des microparticules est de préférence de 1% à 10%. Il est détermine par observation au microscope optique.

La zone diffusante est rectangulaire de 10cm par 10cm. La zone diffusante est une couche pleine, continue.

A titre illustratif, les microparticules sont des microbilles creuses de verre de diamètre moyen D' de 65µm (produit dénommé Glass Bubbles K1 vendu par la société 3M) et dont la coquille est d'épaisseur submicronique E4 de quelques centaines de nm et sont placées dans une résine incolore à base de silicone-époxy dénommée Silikopon® vendue venue par la société TEGO EVONIK. L'ensemble résine chargée de microbilles creuses est étalée sur la deuxième face 12 à l'aide d'une barre d'enduction motorisée (bar coating en anglais) afin d'obtenir une épaisseur de 120µm rapportée sur la deuxième face 12.

Par exemple on place l'illuminant côté opposé à la couche diffusante pour réaliser les mesures de flou et de netteté d'image, avant le feuilletage.

Dans un premier exemple, la concentration des microsphères est choisie afin d'atteindre un taux de couverture de 1%. Le flou H₁ du premier vitrage avec la couche diffusante est de 1,5% et dans une zone sans la couche diffusante inférieure à 1%. La netteté d'image du premier vitrage avec la couche diffusante est de 99% et dans une zone sans la couche diffusante est quasi de 100%. La luminance est supérieure à 1cd/m².

Dans un deuxième exemple, la concentration des microsphères est choisie afin d'atteindre un taux de couverture de 5%. Le flou H₁ du premier vitrage avec la couche diffusante est de 5% et toujours dans une zone sans la couche diffusante inférieure à 1%. La netteté d'image du premier vitrage avec la couche diffusante est de 97% et dans une zone sans la couche diffusante est toujours quasi de 100%. La luminance est de l'ordre de 10cd/m².

Lorsque les diodes sont éteintes, le premier vitrage revêtu de la couche diffusante est de transmission lumineuse TL de l'ordre de 88%.

Le dépôt de la couche diffusante peut être réalisé avant ou après bombage (trempe), de préférence après s'il s'agit s'il s'agit d'une matrice transparente résine.

Alternativement, la couche diffusante 5 est sur la face A.

Le rayon A réfracté dans la couche diffusante 5 rencontre une microsphère creuse diffusante permet l'extraction de lumière notamment vers la face A.

La faible quantité de microsphères creuses alliée au choix d'une matrice transparente permet de limiter le flou H1 du premier vitrage revêtu de la couche diffusante.

On peut choisir des diodes émettant en lumière blanche ou colorée pour un éclairage d'ambiance, de lecture...On peut choisir une lumière rouge pour de la signalisation éventuellement en alternance avec de la lumière verte.

Pour masquer la lumière parasite visible côté face B on utilise un émail opaque sur la bordure de la face de feuilletage 12' du deuxième vitrage 1'.

Le vitrage lumineux de la figure 1 peut former par exemple un toit panoramique lumineux fixe de véhicule automobile comme une voiture, monté par l'extérieur sur la carrosserie 90 via un adhésif 91 comme montré en figure 1'. Le premier vitrage 1 est du côté intérieur du véhicule.

Lorsque les diodes sont allumées, l'extraction peut former un dessin lumineux, par exemple un logo ou une marque.

Dans un mode de réalisation alternatif non illustré d'un vitrage feuilleté, différent par l'absence de la résine de celui décrit en figure 1, les microparticules (microbilles creuses de verre) sont liées par l'intercalaire de feuilletage PVB. Par exemple on étale les microparticules sur la deuxième face (face de feuilletage) du premier vitrage puis on appose la feuille de PVB avant de réaliser le cycle de feuilletage. Par précaution les billes peuvent même être préfixées via des points de colle optique sur la deuxième face, avant le feuilletage.

Alternativement, on étale les microparticules sur la face principale de l'intercalaire de feuilletage destinée à être en contact du premier vitrage puis on appose le premier vitrage avant de réaliser le cycle de feuilletage. Par précaution les billes peuvent même être préfixées via des points de colle optique sur cette face de l'intercalaire, avant le feuilletage.

Ce vitrage lumineux feuilleté de la figure 1 peut former alternativement une custode avant (éventuellement en supprimant l'encapsulation). La couche diffusante forme un répétiteur de clignotant. Elle est sur le premier vitrage clair ou extraclair ici le plus externe, en face F1 ou de préférence en face F2 côté face de feuilletage. Eventuellement une couche opaque de masquage est sur le vitrage interne -teinté ou non- par exemple en face F3. On peut aussi former des répétiteurs de clignotant sur la custode arrière.

Ce vitrage lumineux feuilleté peut former alternativement un pare-brise avant (éventuellement en supprimant ou adaptant l'encapsulation). La couche diffusante forme un signal anti collisions pour le conducteur et est sur le premier vitrage clair ou extraclair le plus interne en face F4 ou en face F3 notamment formant une bande le long du bord longitudinal inférieur. Par exemple, la lumière s'allume (rouge) lorsqu'un véhicule de devant est trop proche. Le deuxième vitrage est également un verre clair ou extraclair.

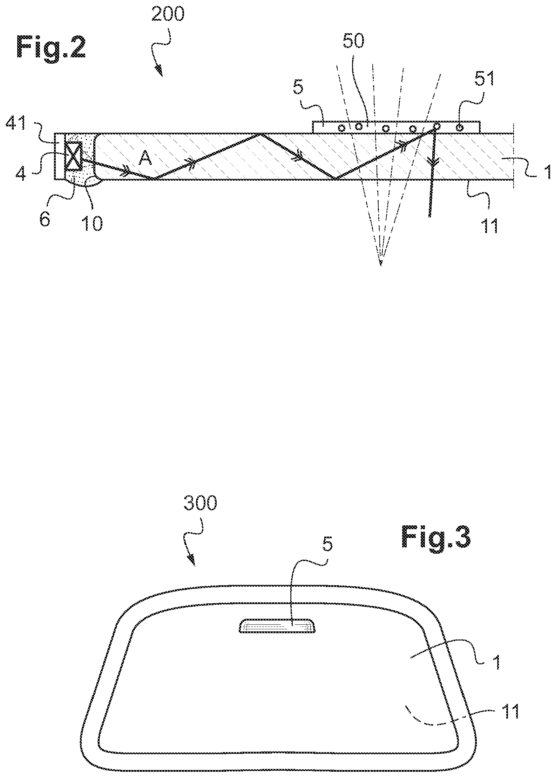

Dans la figure 2 le vitrage lumineux de voiture diffère de celui décrit en figure 1 par le fait qu'il s'agit d'un vitrage monolithique et même sans encapsulation polymérique. En outre, les diodes sont à émission par le haut. Le support PCB 41 est par exemple fixé à la tranche 10 par la colle optique 6.

Ce vitrage lumineux forme par exemple un toit par exemple en verre minéral clair ou en polycarbonate.

Ce vitrage lumineux forme encore un vitrage latéral en verre minéral clair ou en polycarbonate pour une signalisation :
- par exemple détection du véhicule (dans un parking etc)
- répétiteur de clignotant de préférence dans une custode (custode avant côté conducteur ou custode arrière).

La figure 3 montre une voiture avec le vitrage lumineux selon l'invention qui est une lunette arrière avec une zone lumineuse pour une signalisation. La couche diffusante 5 avec les microparticules forme un troisième feu stop (bande diffusante 5 centrée le long du bord longitudinal supérieur), les diodes (masquées) émettant dans le rouge.

Si on choisit un vitrage monolithique, on préfère que la couche diffusante soit sur la deuxième face dite face F2 du premier vitrage 1, en particulier si la première face 11 dite face F1 (face A) est dotée d'essuie glaces. On peut rajouter un film plastique teinté en interne.

Si on choisit un vitrage feuilleté on préfère que la couche diffusante soit sur la face de feuilletage dite F2 du premier vitrage 1 le plus extérieur (verre clair comme Planilux®, ou Planiclear® ou verre extraclair comme Diamant® ou Optiwhite™), en particulier si la face A (première face 11) dite face F1 est dotée d'essuie glaces.

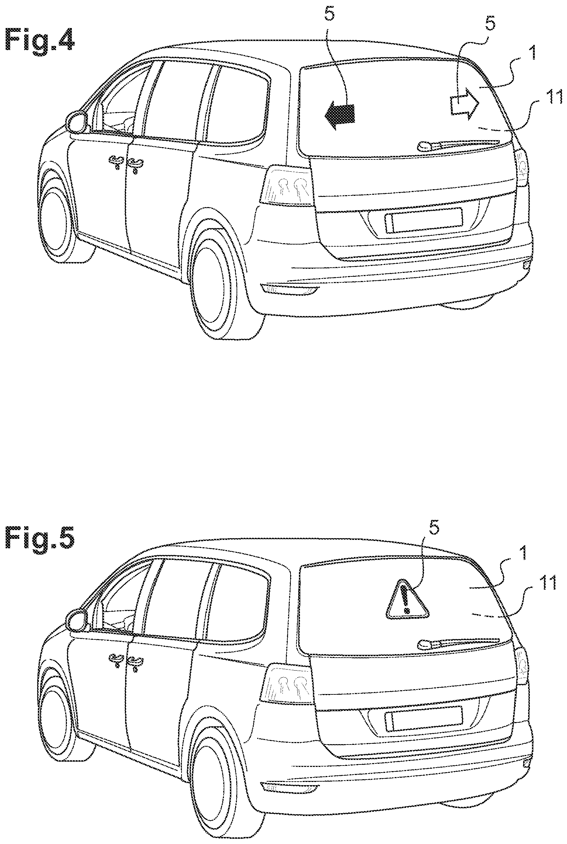

La figure 4 montre une voiture avec le vitrage lumineux qui est une lunette arrière avec une zone lumineuse pour une signalisation extérieure. La couche diffusante 5 avec les microparticules forme des clignotants ou des répétiteurs des clignotants (deux flèches de sens opposé dirigées vers l'extérieur du vitrage et à proximité des bords latéraux). On peut préférer mettre les diodes (masquées ici) sur chaque bord latéral.

Si on choisit un vitrage monolithique, on préfère que la couche diffusante soit sur la deuxième face dite face F2 du premier vitrage 1, en particulier si la première face 11 dite face F1 (face A) est dotée d'essuie glaces. On peut rajouter un film plastique teinté en interne.

Si on choisit un vitrage feuilleté on préfère que la couche diffusante soit sur la face de feuilletage dite F2 du premier vitrage 1 le plus extérieur (verre clair comme Planilux®, ou Planiclear® ou verre extraclair come Diamant® ou Optiwhite™), en particulier si la face A (première face 11) dite face F1 est dotée d'essuie glaces.

La figure 5 montre une voiture avec le vitrage lumineux qui est une lunette arrière avec une zone lumineuse pour une signalisation extérieure. La couche diffusante 5 peut former un signal lumineux de secours, en rouge, en forme bien connu d'un triangle lumineux avec un point d'exclamation central.

Si on choisit un vitrage monolithique, on préfère que la couche diffusante soit sur la deuxième face dite face F2 du premier vitrage 1, en particulier si la première face 11 dite face F1 (face A) est dotée d'essuie glaces. On peut rajouter un film plastique teinté en interne.

Si on choisit un vitrage feuilleté on préfère que la couche diffusante soit sur la face de feuilletage dite F2 du premier vitrage 1 le plus extérieur (verre clair comme Planilux®, ou Planiclear® ou verre extraclair come Diamant® ou Optiwhite™), en particulier si la face A (première face 11) dite face F1 est dotée d'essuie glaces.

## Revendications

1. Vitrage lumineux de véhicule automobile (100, 200, 300) comprenant :
- un module verrier avec une tranche et des faces principales externes (11, 11') dénommées face A et face B, module comportant au moins un premier vitrage (1), en verre minéral ou organique, d'indice de réfraction n1 d'au moins 1,4 à 550 nm avec des première et deuxième faces principales (11, 12),
- une source de lumière (4) couplée optiquement au module verrier, de préférence au premier vitrage, le module verrier formant ainsi guide de lumière émise par la source de lumière,
- des moyens d'extraction de lumière de la lumière guidée pour former une zone diffusante (5) de largeur d'au moins 1cm, moyens d'extraction de lumière comportant une couche diffusante comprenant des particules diélectriques diffusantes (51) et liées par une matrice (50), couche diffusante associée à l'une des première ou deuxième faces,
**caractérisé en ce que** la matrice (50) est transparente d'indice de réfraction n2 au moins égal à n1 ou tel que n1-n2 est d'au plus 0,15 à 550 nm et **en ce que** les particules diffusantes en majorité sont des microparticules espacées entre elles et comprenant une coquille en un matériau diélectrique et transparent et en contact avec la matrice transparente, coquille (52) entourant un coeur (53) d'indice de réfraction n3 d'au plus 1,15 à 550 nm, coeur de plus grande dimension dite D3 dans une gamme allant de 5µm à 200µm, les microparticules ayant une plus grande dimension dite D'inférieure à 2D₃.

2. Vitrage lumineux de véhicule automobile (100, 200, 300) selon la revendication 1 **caractérisé en ce que** le taux de couverture des microparticules (51) est d'au plus 20% et de préférence d'au plus 10% et même d'au moins 1%.

3. Vitrage lumineux de véhicule automobile (100, 200, 300) selon l'une des revendications précédentes **caractérisé en ce que** les microparticules (51) sont creuses et de préférence le matériau diélectrique de la coquille (52) est en verre minéral, en silice, en oxyde métallique.

4. Vitrage lumineux de véhicule automobile (100, 200, 300) selon l'une des revendications précédentes **caractérisé en ce que** le matériau diélectrique de la coquille (52) est en verre minéral ou en silice, en oxyde métallique.

5. Vitrage lumineux de véhicule automobile (100, 200, 300) selon l'une des revendications précédentes **caractérisé en ce que** ladite plus grande dimension D₃ est dans la gamme allant de 20µm à 100µm.

6. Vitrage lumineux de véhicule automobile (100, 200, 300) selon l'une des revendications précédentes **caractérisé en ce que** la couche diffusante (5) comporte une couche liant les microparticules en matériau choisi parmi un liant organique, en particulier à base d'acrylate, de silicone, d'époxy, de silicone-époxy ou de polyuréthane, ou un liant minéral comme un oxyde métallique et/ou de silice et/ou la couche diffusante (5) comporte une couche PVB liant les microparticules.

7. Vitrage lumineux de véhicule automobile (100, 200, 300) selon l'une des revendications précédentes **caractérisé en ce que** la couche diffusante (5) est directement sur la première (11) ou la deuxième face (12) du premier vitrage (1), et en définissant le flou, dit H₁, à l'état off, de l'ensemble premier vitrage et couche diffusante, H1 est d'au plus 10% et de préférence d'au plus 5% et même d'au plus 2%.

8. Vitrage lumineux de véhicule automobile (100, 200, 300) selon l'une des revendications précédentes **caractérisé en ce que** la couche diffusante (5) est directement sur la première (11) ou la deuxième face (12) du premier vitrage (1) et la netteté d'image, à l'état off de l'ensemble premier vitrage et couche diffusante est d'au moins 90%.

9. Vitrage lumineux de véhicule automobile (100, 200, 300) selon l'une des revendications précédentes **caractérisé en ce que** la source de lumière comporte un ensemble de diodes électroluminescentes (4) de préférence sur un support PCB.

10. Vitrage lumineux de véhicule automobile (100) selon l'une des revendications précédentes **caractérisé en ce que** la source de lumière, de préférence des diodes sur support PCB, est couplée optiquement au premier vitrage, la couche diffusante est de préférence sur la première face ou sur la deuxième face, le module verrier est un vitrage feuilleté comportant ledit premier vitrage en verre minéral (1) de préférence clair ou extraclair, notamment d'épaisseur d'au plus 2,1mm, et comportant du côté de la deuxième face (12) une intercalaire de feuilletage (2) en matière polymérique de préférence thermoplastique et un deuxième vitrage (1') en verre minéral, notamment d'épaisseur d'au plus 2,1mm, vitrage lumineux notamment choisi parmi :
- un toit, avec le premier vitrage le plus interne, la couche diffusante est de préférence entre la deuxième face et l'intercalaire de feuilletage, le deuxième vitrage et/ou l'intercalaire de feuilletage étant de préférence teinté
- un pare-brise, avec le premier vitrage le plus interne, la couche diffusante est de préférence entre la deuxième face et l'intercalaire de feuilletage
- ou un vitrage latéral ou un vitrage de porte arrière ou une lunette arrière avec le premier vitrage le plus externe, la couche diffusante est de préférence entre la deuxième face et l'intercalaire de feuilletage.

11. Vitrage lumineux de véhicule automobile selon l'une des revendications précédentes **caractérisé en ce que** la source de lumière, de préférence des diodes sur support PCB, est couplée optiquement au premier vitrage, le module verrier est un vitrage feuilleté comportant ledit premier vitrage en verre minéral (1) de préférence clair ou extraclair, et côté deuxième face une intercalaire de feuilletage en matière polymérique de préférence thermoplastique (2) et un deuxième vitrage (1') en verre minéral, l'intercalaire de feuilletage et/ou le deuxième vitrage étant de préférence teinté, et **en ce qu'**une couche de silice poreuse sol-gel d'indice de réfraction d'au plus 1,3 à 550 nm même d'au plus 1,2 à 550 nm est sur la deuxième face du premier vitrage et la couche diffusante sur la première face ou sur la deuxième face adjacente à la couche de silice poreuse.

12. Vitrage lumineux de véhicule automobile selon l'une des revendications 1 à 9 **caractérisé en ce que** la source de lumière, de préférence des diodes sur support PCB, est couplée optiquement au premier vitrage, le module verrier est un vitrage feuilleté comportant ledit premier vitrage en verre minéral de préférence clair ou extraclair notamment d'épaisseur d'au plus 2,1mm, une intercalaire de feuilletage en matière polymérique de préférence thermoplastique et un deuxième vitrage en verre minéral notamment d'épaisseur d'au plus 2,1mm et **en ce que** les microparticules sont liées par la matière polymérique formant tout ou partie de la matrice transparente.

13. Vitrage lumineux de véhicule automobile (100) selon l'une des revendications 9 à 12 **caractérisé en ce que** l'intercalaire de feuilletage est un PVB notamment clair ou teinté.

14. Vitrage lumineux de véhicule automobile (100) selon l'une des revendications 9 à 13 **caractérisé en ce que** les premier et deuxième vitrages sont bombés, le premier vitrage est clair ou extraclair et l'intercalaire de feuilletage et/ou le deuxième vitrage est teinté.

15. Vitrage lumineux de véhicule automobile (200) selon l'une des revendications 1 à 9 **caractérisé en ce que** la source de lumière, de préférence des diodes sur support PCB, est couplée optiquement au premier vitrage, la couche diffusante est sur la première face ou sur la deuxième face, le module verrier est un vitrage monolithique, le premier vitrage en verre minéral étant de préférence bombé et /ou trempé thermiquement.

16. Véhicule automobile incorporant un vitrage lumineux (100 à 300) selon l'une des revendications précédentes, le vitrage lumineux étant notamment un toit de voiture.

## Patentansprüche

1. Beleuchtete Glasscheibe eines Kraftfahrzeugs (100, 200, 300), umfassend:
- ein Glasmodul mit einer Randfläche und äußeren Hauptflächen (11, 11'), als Fläche A und Fläche B bezeichnet, wobei das Modul mindestens eine erste Glasscheibe (1) aus anorganischem oder organischem Glas mit einem Brechungsindex n1 von mindestens 1,4 bei 550 nm mit einer ersten und zweiten Hauptfläche (11, 12) umfasst,
- eine Lichtquelle (4), die mit dem Glasmodul, vorzugsweise mit der ersten Glasscheibe, optisch gekoppelt ist, sodass das Glasmodul für das von der Lichtquelle abgestrahlte Licht einen Lichtleiter bildet,
- Mittel zum Auskoppeln von Licht aus dem geführten Licht, um eine mindestens 1 cm breite Streuzone (5) zu bilden, wobei die Mittel zum Auskoppeln von Licht eine streuende Schicht umfassen, die streuende dielektrische Partikel (51) enthält, die durch eine Matrix (50) gebunden sind, wobei die streuende Schicht mit der ersten oder der zweiten Fläche verbunden ist,
**dadurch gekennzeichnet, dass** die Matrix (50) transparent ist, mit einem Brechungsindex n2, der mindestens gleich n1 oder derart ist, dass bei 550 nm n1 - n2 höchstens 0,15 beträgt, und dadurch, dass die streuenden Partikel in der Mehrzahl Mikropartikel sind, die voneinander beabstandet sind und eine Hülle aus einem dielektrischen und transparenten Material in Kontakt mit der transparenten Matrix aufweisen, wobei die Hülle (52) einen Kern (53) mit einem Brechungsindex n3 von höchstens 1,15 bei 550 nm umgibt, wobei die größte, als D3 bezeichnete Abmessung des Kerns im Bereich von 5 µm bis 200 µm liegt, wobei die Mikropartikel eine größte, als D' bezeichnete Abmessung aufweisen, die kleiner als 2D₃ ist.

2. Beleuchtete Glasscheibe eines Kraftfahrzeugs (100, 200, 300) nach Anspruch 1, **dadurch gekennzeichnet, dass** der Bedeckungsgrad der Mikropartikel (51) höchstens 20 % und vorzugsweise höchstens 10 % und sogar mindestens 1 % beträgt.

3. Beleuchtete Glasscheibe eines Kraftfahrzeugs (100, 200, 300) nach einem der vorhergehenden Ansprüche, **dadurch gekennzeichnet, dass** die Mikropartikel (51) hohl sind und das dielektrische Material der Hülle (52) vorzugsweise aus anorganischem Glas, aus Quarz, aus Metalloxid besteht.

4. Beleuchtete Glasscheibe eines Kraftfahrzeugs (100, 200, 300) nach einem der vorhergehenden Ansprüche, **dadurch gekennzeichnet, dass** das dielektrische Material der Hülle (52) aus anorganischem Glas oder aus Quarz, aus Metalloxid besteht.

5. Beleuchtete Glasscheibe eines Kraftfahrzeugs (100, 200, 300) nach einem der vorhergehenden Ansprüche, **dadurch gekennzeichnet, dass** die größte Abmessung D₃ im Bereich von 20 µm bis 100 µm liegt.

6. Beleuchtete Glasscheibe eines Kraftfahrzeugs (100, 200, 300) nach einem der vorhergehenden Ansprüche, **dadurch gekennzeichnet, dass** die streuende Schicht (5) eine die Mikropartikel bindende Schicht aus einem Material, das aus einem organischen Bindemittel, insbesondere auf Acrylat-, Silikon-, Epoxid-, Silikonepoxid- oder Polyurethanbasis, oder einem anorganischen Bindemittel, wie etwa einem Metalloxid und/oder Siliciumdioxid, ausgewählt ist, umfasst und/oder die streuende Schicht (5) eine die Mikropartikel bindende PVB-Schicht umfasst.

7. Beleuchtete Glasscheibe eines Kraftfahrzeugs (100, 200, 300) nach einem der vorhergehenden Ansprüche, **dadurch gekennzeichnet, dass** sich die streuende Schicht (5) direkt auf der ersten (11) oder der zweiten Fläche (12) der ersten Glasscheibe (1) befindet und, bei Zugrundelegung der als H₁ bezeichneten Unschärfe, im Off-Zustand für die Gesamtheit aus erster Glasscheibe und streuender Schicht H₁ höchstens 10 % und vorzugsweise höchstens 5 % und sogar höchstens 2 % beträgt.

8. Beleuchtete Glasscheibe eines Kraftfahrzeugs (100, 200, 300) nach einem der vorhergehenden Ansprüche, **dadurch gekennzeichnet, dass** sich die streuende Schicht (5) direkt auf der ersten (11) oder der zweiten Fläche (12) der ersten Glasscheibe (1) befindet und die Bildschärfe im Off-Zustand für die Gesamtheit aus erster Glasscheibe und streuender Schicht mindestens 90 % beträgt.

9. Beleuchtete Glasscheibe eines Kraftfahrzeugs (100, 200, 300) nach einem der vorhergehenden Ansprüche, **dadurch gekennzeichnet, dass** die Lichtquelle einen Satz Leuchtdioden (4), vorzugsweise auf einem Leiterplattenträger, umfasst.

10. Beleuchtete Glasscheibe eines Kraftfahrzeugs (100) nach einem der vorhergehenden Ansprüche, **dadurch gekennzeichnet, dass** die Lichtquelle, vorzugsweise Dioden auf einem Leiterplattenträger, mit der ersten Glasscheibe optisch gekoppelt ist, sich die streuende Schicht vorzugsweise auf der ersten Fläche oder auf der zweiten Fläche befindet, das Glasmodul eine Verbundverglasung ist, welche die erste Glasscheibe aus anorganischem Glas (1), vorzugsweise klar oder extraklar, insbesondere mit einer Dicke von höchstens 2,1 mm, umfasst und auf der Seite der zweiten Fläche (12) eine Verbund-Zwischenschicht (2) aus polymerem, vorzugsweise thermoplastischem, Material und eine zweite Glasscheibe (1') aus anorganischem Glas, insbesondere mit einer Dicke von höchstens 2,1 mm, umfasst, wobei die beleuchtete Glasscheibe insbesondere ausgewählt ist aus:
- einem Dach, mit der ersten Glasscheibe am weitesten innen, wobei sich die streuende Schicht vorzugsweise zwischen der zweiten Fläche und der Verbund-Zwischenschicht befindet, wobei die zweite Glasscheibe und/oder die Verbund-Zwischenschicht vorzugsweise getönt ist,
- einer Windschutzscheibe, mit der ersten Glasscheibe am weitesten innen, wobei die streuende Schicht sich vorzugsweise zwischen der zweiten Fläche und der Verbund-Zwischenschicht befindet,
- oder einer Seitenscheibe oder einer Hecktürverglasung oder einer Heckscheibe, mit der ersten Glasscheibe am weitesten außen, wobei die streuende Schicht sich vorzugsweise zwischen der zweiten Fläche und der Verbund-Zwischenschicht befindet.

11. Beleuchtete Glasscheibe eines Kraftfahrzeugs nach einem der vorhergehenden Ansprüche, **dadurch gekennzeichnet, dass** die Lichtquelle, vorzugsweise Dioden auf einem Leiterplattenträger, mit der ersten Glasscheibe optisch gekoppelt ist, das Glasmodul eine Verbundverglasung ist, welche die erste Glasscheibe aus anorganischem Glas (1), vorzugsweise klar oder extraklar, umfasst und auf der Seite der zweiten Fläche eine Verbund-Zwischenschicht aus polymerem, vorzugsweise thermoplastischem, Material (2) und eine zweite Glasscheibe (1') aus anorganischem Glas umfasst, wobei die Verbund-Zwischenschicht und/oder die zweite Glasscheibe vorzugsweise getönt sind, und dadurch, dass sich eine poröse Sol-Gel-Quarzschicht mit einem Brechungsindex von höchstens 1,3 bei 550 nm oder sogar höchstens 1,2 bei 550 nm auf der zweiten Fläche der ersten Glasscheibe befindet und die streuende Schicht auf der ersten Fläche oder auf der zweiten Fläche an die poröse Quarzschicht angrenzt.

12. Beleuchtete Glasscheibe eines Kraftfahrzeugs nach einem der Ansprüche 1 bis 9, **dadurch gekennzeichnet, dass** die Lichtquelle, vorzugsweise Dioden auf einem Leiterplattenträger, mit der ersten Glasscheibe optisch gekoppelt ist, das Glasmodul eine Verbundverglasung ist, welche die erste Glasscheibe aus anorganischem Glas, vorzugsweise klar oder extraklar, insbesondere mit einer Dicke von höchstens 2,1 mm, eine Verbund-Zwischenschicht aus polymerem, vorzugsweise thermoplastischem, Material und eine zweite Glasscheibe aus anorganischem Glas, insbesondere mit einer Dicke von höchstens 2,1 mm, umfasst und dadurch, dass die Mikropartikel durch das polymere Material gebunden sind, das die transparente Matrix ganz oder teilweise bildet.

13. Beleuchtete Glasscheibe eines Kraftfahrzeugs (100) nach einem der Ansprüche 9 bis 12, **dadurch gekennzeichnet, dass** die Verbund-Zwischenschicht ein PVB, insbesondere klar oder getönt, ist.

14. Beleuchtete Glasscheibe eines Kraftfahrzeugs (100) nach einem der Ansprüche 9 bis 13, **dadurch gekennzeichnet, dass** die erste und die zweite Glasscheibe gewölbt sind, die erste Glasscheibe klar oder extraklar ist und die Verbund-Zwischenschicht und/oder die zweite Glasscheibe getönt ist.

15. Beleuchtete Glasscheibe eines Kraftfahrzeugs (200) nach einem der Ansprüche 1 bis 9, **dadurch gekennzeichnet, dass** die Lichtquelle, vorzugsweise Dioden auf einem Leiterplattenträger, mit der ersten Glasscheibe optisch gekoppelt ist, sich die streuende Schicht auf der ersten Fläche oder auf der zweiten Fläche befindet, das Glasmodul eine monolithische Verglasung ist, wobei die erste Glasscheibe aus anorganischem Glas vorzugsweise gewölbt und/oder thermisch vorgespannt ist.

16. Kraftfahrzeug mit einer beleuchteten Glasscheibe (100 bis 300) nach einem der vorhergehenden Ansprüche, wobei die beleuchtete Glasscheibe insbesondere ein Fahrzeugdach ist.

## Claims

1. A luminous automotive-vehicle glazing unit (100, 200, 300) comprising:
- a glazing module with an edge face and external main faces (11, 11') denoted face A and face B, said module including at least one first glazing pane (1), made of organic or mineral glass, of refractive index n1 of at least 1.4 at 550 nm with first and second main faces (11, 12);
- a light source (4) optically coupled to the glazing module and preferably to the first glazing pane, the glazing module thus forming a guide of light emitted by the light source; and
- light-extracting means for extracting the guided light in order to form a scattering zone (5) of width of at least 1 cm, said light-extracting means including a scattering layer comprising scattering dielectric particles (51) bound by a matrix (50), said scattering layer being associated with one of the first or second faces;
**characterized in that** the matrix (50) is transparent and of refractive index n2 at least equal to n1 or such that n1-n2 is at most 0.15 at 550 nm
and **in that** the scattering particles are mainly microparticles that are spaced apart from one another and that comprise a shell made of a transparent dielectric material and making contact with the transparent matrix, said shell (52) surrounding a core (53) of refractive index n3 of at most 1.15 at 550 nm, said core having a largest dimension called D3 in a range extending from 5 µm to 200 µm, the microparticles having a largest dimension D' smaller than 2D₃.

2. The luminous automotive-vehicle glazing unit (100, 200, 300) as claimed in claim 1, **characterized in that** the degree of coverage of the microparticles (51) is at most 20% and preferably at most 10% and even at least 1%.

3. The luminous automotive-vehicle glazing unit (100, 200, 300) as claimed in one of the preceding claims, **characterized in that** the microparticles (51) are hollow and preferably the dielectric material of the shell (52) is mineral glass, silica or a metal oxide.

4. The luminous automotive-vehicle glazing unit (100, 200, 300) as claimed in one of the preceding claims, **characterized in that** the dielectric material of the shell (52) is mineral glass, silica or a metal oxide.

5. The luminous automotive-vehicle glazing unit (100, 200, 300) as claimed in one of the preceding claims, **characterized in that** said largest dimension D₃ is in the range extending from 20 µm to 100 µm.

6. The luminous automotive-vehicle glazing unit (100, 200, 300) as claimed in one of the preceding claims, **characterized in that** the scattering layer (5) includes a layer binding the microparticles made of a material chosen from an organic binder, in particular one based on acrylate, silicone, epoxy, silicone-epoxy or polyurethane, or a mineral binder such as a metal oxide and/or silica and/or the scattering layer (5) includes a PVB layer binding the microparticles.

7. The luminous automotive-vehicle glazing unit (100, 200, 300) as claimed in one of the preceding claims, **characterized in that** the scattering layer (5) is directly on the first face (11) or the second face (12) of the first glazing pane (1), and, defining the haze, called H₁, in the off state, of the first glazing pane and scattering layer together, H1 is at most 10% and preferably at most 5% and even at most 2%.

8. The luminous automotive-vehicle glazing unit (100, 200, 300) as claimed in one of the preceding claims, **characterized in that** the scattering layer (5) is directly on the first face (11) or the second face (12) of the first glazing pane (1), and, the image clearness, in the off state, of the first glazing pane and the scattering layer together, is at least 90%.

9. The luminous automotive-vehicle glazing unit (100, 200, 300) as claimed in one of the preceding claims, **characterized in that** the light source includes a set of light-emitting diodes (4) preferably on a PCB carrier.

10. The luminous automotive-vehicle glazing unit (100) as claimed in one of the preceding claims, **characterized in that** the light source, preferably diodes on a PCB carrier, is optically coupled to the first glazing pane, the scattering layer is preferably on the first face or on the second face, the glazing module is a laminated glazing unit including said first glazing pane made of, preferably clear or extra-clear, mineral glass (1), in particular of thickness of at most 2.1 mm, and including on the side of the second face (12) a lamination interlayer (2) made of a preferably thermoplastic polymeric material and a second glazing pane (1') made of mineral glass, in particular of thickness of at most 2.1 mm, said luminous glazing unit in particular being chosen from:
- a roof, with the first glazing pane innermost, the scattering layer is preferably between the second face and the lamination interlayer, the second glazing pane and/or the lamination interlayer preferably being tinted;
- a windshield, with the first glazing pane innermost, the scattering layer is preferably between the second face and the lamination interlayer; and
- a side window or rear-door window or a rear windshield, with the first glazing pane outermost, the scattering layer is preferably between the second face and the lamination interlayer.

11. The luminous automotive-vehicle glazing unit as claimed in one of the preceding claims, **characterized in that** the light source, preferably diodes on a PCB carrier, is optically coupled to the first glazing pane, the glazing module is a laminated glazing unit including said first glazing pane made of, preferably clear or extra-clear, mineral glass (1) and, on the second-face side, a lamination interlayer made of a preferably thermoplastic polymeric material (2) and a second glazing pane (1') made of mineral glass, the lamination interlayer and/or the second glazing pane preferably being tinted, and **in that** a layer of porous silica sol-gel of refractive index of at most 1.3 and even of at most 1.2 at 550 nm is on the second face of the first glazing pane and the scattering layer on the first face or on the second face adjacent to the porous silica layer.

12. The luminous automotive-vehicle glazing unit as claimed in one of claims 1 to 9, **characterized in that** the light source, preferably diodes on a PCB carrier, is optically coupled to the first glazing pane, the glazing module is a laminated glazing unit including said first glazing pane made of, preferably clear or extra-clear, mineral glass in particular of thickness of at most 2.1 mm, a lamination interlayer made of preferably thermoplastic polymeric material and a second glazing pane made of mineral glass in particular of thickness of at most 2.1 mm, and **in that** the microparticles are bound by the polymeric material forming all or some of the transparent matrix.

13. The luminous automotive-vehicle glazing unit (100) as claimed in one of claims 9 to 12, **characterized in that** the lamination interlayer is an in particular clear or tinted PVB.

14. The luminous automotive-vehicle glazing unit (100) as claimed in one of claims 9 to 13, **characterized in that** the first and second glazing panes are curved, the first glazing pane is clear or extra-clear and the lamination interlayer and/or the second glazing pane is tinted.

15. The luminous automotive-vehicle glazing unit (200) as claimed in one of claims 1 to 9, **characterized in that** the light source, preferably diodes on a PCB carrier, is optically coupled to the first glazing pane, the scattering layer is on the first face or on the second face, and the glazing module is a monolithic glazing unit, the first glazing pane made of mineral glass preferably being thermally tempered and/or curved.

16. An automotive vehicle incorporating a luminous glazing unit (100 to 300) as claimed in one of the preceding claims, said luminous glazing unit being in particular an automobile roof.
